(19) Europäisches Patentamt
European Patent Office
Office européen des brevets

(11) **EP 4 708 507 A1**

(12) **EUROPEAN PATENT APPLICATION**

(43) Date of publication:
**11.03.2026 Bulletin 2026/11**

(21) Application number: **25198014.0**

(22) Date of filing: **26.08.2025**

(51) International Patent Classification (IPC):
*H01M 50/242* [(2021.01)]     *H01M 50/249* [(2021.01)]

(52) Cooperative Patent Classification (CPC):
**H01M 50/242; H01M 50/249; H01M 50/273**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.09.2024 JP 2024154075**

(71) Applicant: **MAZDA MOTOR CORPORATION**
**Hiroshima 730-8670 (JP)**

(72) Inventors:
• **NAKAGAWA, Kohya**
**Aki-gun, Hiroshima, 730-8670 (JP)**
• **KAWAMURA, Chikara**
**Aki-gun, Hiroshima, 730-8670 (JP)**

(74) Representative: **Müller-Boré & Partner**
**Patentanwälte PartG mbB**
**Friedenheimer Brücke 21**
**80639 München (DE)**

(54) **BATTERY MODULE, BATTERY MOUNTING STRUCTURE FOR VEHICLE, AND VEHICLE**

(57)     A battery module 10 mounted on a vehicle body 1 includes: a battery casing 21; a plurality of cells 22 disposed in series in a vehicle front-rear direction; and an elastic member 24 covering at least one of an upper surface and a lower surface of each of the plural cells 22 and coupling the cells. when an elastic modulus of the elastic member 24 is E [N/m$^2$], cross-sectional second moment of collection of the plurality of cells 22 and the elastic member 24 is I [m$^4$], a total length of the plural cells 22 in the vehicle front-rear direction is L [m], and a value of tan $\delta$ as a loss factor of the elastic member 24 is x, E, I, L, and x are set such that EI/L$^3$ satisfies A $\leq$ EI/L$^3$ $\leq$ B, where A = 4320x$^{-0.44}$, B = 41812x$^{0.0931}$.

*FIG. 2*

EP 4 708 507 A1

# Description

[Technical Field]

The present invention relates to a battery module, a battery mounting structure for a vehicle or an electric vehicle, and a vehicle.

[Background Art]

Conventionally, in an electric vehicle in which a battery module having a plurality of cells accommodated in a battery casing is mounted on a vehicle body, the plurality of cells in the battery casing individually vibrates in an up-down direction by vibration input to the vehicle body from a suspension or the like that supports a wheel during travel of a vehicle, and the vibration is transmitted to the cabin. This results in noise, vibration, or harshness (roughness, non-comfort) that affects ride comfort in the cabin. Therefore, in the electric vehicle, improvement in NVH performance, which is performance for reducing these noise, vibration, and harshness, is a problem.

Therefore, in order to improve the NVH performance, in the structure described in Patent Literature 1, the battery casing includes a pair of side plates having a **C**-shaped cross section so as not to vibrate the plurality of cells in the battery module in the up-down direction. Each of the paired side plates has an upper flange portion and a lower flange portion that support the cells from both upper and lower sides. The pair of side plates having the **C**-shaped cross section collectively restrains left and right sides of the plurality of cells. In this way, the upper and lower flange portions suppress the vibration of each of the cells in the up-down direction, and the NVH performance is thereby improved.

[Citation List]

[Patent Literature]

[Patent Literature 1] JP2023-46644A

[Summary]

[Technical Problem]

However, in the above structure, the pair of side plates having the C-shaped cross section collectively restrains the left and right sides of the plurality of cells, and the upper and lower flange portions thereby suppress the vibration of each of the cells in the up-down direction. However, an influence on the vibration caused by resonance of each of the cells during the travel of the vehicle is not taken into consideration, and there is room for improvement in the NVH performance.

The invention has been made in view of the above-described circumstance, and therefore has an object of improving NVH performance.

[Solution to Problem]

The above problem is solved by a battery module or a battery mounting structure according to the invention as defined by the independent claims. Particularly, a battery mounting structure for a vehicle or an electric vehicle includes: a vehicle body; at least one battery module fixed to the vehicle body; and a pair of left and right front wheels attached or rotatably attached to both left and right front portions of the vehicle body. The front wheel may be attached in a freely rotatable manner. The battery module includes: a battery casing; a plurality of cells accommodated in the battery casing and disposed in series in a vehicle front-rear direction; and an elastic member that covers at least one surface of an upper surface and a lower surface of each of the plural cells, couples the cells, and is coupled to both end portions in the vehicle front-rear direction of the battery casing. When an elastic modulus of the elastic member is $E$ [N/m$^2$], cross-sectional second moment of collection of the plurality of cells and the elastic member is $I$ [m$^4$], a total length of the plural cells in the vehicle front-rear direction is $L$ [m], and a value of $\tan\delta$ as a loss factor of the elastic member is $x$, $EI/L^3$ satisfies the following equation, $A \leq EI/L^3 \leq B$, where $A = 4320x^{-0.44}$, $B = 41812x^{0.0931}$. In other words, $E$, $I$, $L$, and $x$ are set such that $EI/L^3$ satisfies the following equation, $A \leq EI/L^3 \leq B$, where $A = 4320x^{-0.44}$, $B = 41812x^{0.0931}$.

According to such a configuration, a vibration wave input to the vehicle body from the pair of left and right front wheels during travel of the electric vehicle is transmitted to the battery module fixed to the vehicle body. At the time, in the battery module, an elastic wave is sequentially transmitted to the plurality of cells aligned in the vehicle front-rear direction via the elastic member that is coupled to both end portions in the vehicle front-rear direction of the battery casing.

In the above configuration, the elastic modulus $E$ of the elastic member, the cross-sectional second moment $I$ of the collection of the plurality of cells and the elastic member, the total length of the plural cells in the vehicle front-rear direction, and the value of $\tan\delta$ as the loss factor of the elastic member is set such that the $EI/L^3$ satisfies the above equation. In this way, the plurality of cells resonates, thereby interferes with the elastic wave, and reduces the elastic wave.

In other words, in a frequency band of the vibration input to the vehicle body during the travel of the vehicle, dissipation and interference of vibration energy occur to the vibration that is sequentially transmitted for each of the cells in series in the vehicle front-rear direction. That is, a vibration damping effect is achieved by so-called meta-damping for continuously damping the vibration along a transmission direction of the vibration by using the mass of the plural cells arranged in series and the loss factor or a damping characteristic of the elastic member.

Just as described, NVH performance of the vehicle can be improved by effectively blocking the vibration input from the front wheels to the vehicle body by using the plurality of cells and the elastic member and thereby suppressing the transmission into the cabin. Thus, it is possible to suppress the vibration at the frequency in a road noise band that is input to the vehicle body during the travel.

For example, when the value of tan $\delta$ is x=2, $EI/L^3$ satisfies the following equation, $A \leq EI/L^3 \leq B$, where $A = 3.18 \times 10^3$, $B = 4.46 \times 10^4$. In other words, E, I, and L are preferably set such that $EI/L^3$ satisfies the following equation, $A \leq EI/L^3 \leq B$, where $A = 3.18 \times 10^3$, $B = 4.46 \times 10^4$.

According to such a configuration, when the value of tan $\delta$ as the loss factor of the elastic member is x=2, a range of $EI/L^3$, that is, a range between a minimum value A and a maximum value B can be made widest, and the vibration in the road noise band can be suppressed by selecting, from the wide range, the elastic modulus E of the elastic member constituting the $EI/L^3$, the cross-sectional second moment I of the collection of the plurality of cells and the elastic member, and the total length L of the plurality of cells in the vehicle front-rear direction. As a result, a degree of freedom in design of the battery mounting structure is improved.

For example, the elastic member preferably covers both the upper surface and the lower surface of each of the plurality of cells.

In such a configuration, the elastic member can stably support the plurality of cells by covering both the upper surface and the lower surface of each of the plurality of cells. As a result, the individual cells can reliably be resonated with the elastic wave, and the stable vibration suppressing effect can be achieved.

[Advantageous Effects of Invention]

As it has been described so far, according to the battery mounting structure for the electric vehicle in the invention, the NVH performance can be improved.

[Brief Description of Drawings]

[FIG. 1] FIG. 1 is a plan view illustrating an overall configuration of a vehicle lower portion of an electric vehicle, to which a battery mounting structure for an electric vehicle according to an embodiment of the invention is applied.
[FIG. 2] FIG. 2 is an exploded perspective view illustrating a plurality of cells and an elastic member in a battery module in FIG. 1.
[FIG. 3] FIG. 3 is a perspective view illustrating behavior in which a collection of the plurality of cells and the elastic member is deformed due to vibration input during travel of the vehicle in a state where upper surfaces of the plurality of cells in FIG. 2 are coupled by the elastic member.
[FIG. 4] FIG. 4 is an enlarged cross-sectional view of the elastic member in FIG. 2.
[FIG. 5] FIG. 5 is a graph of a loss factor tan $\delta$ and $EI/L^3$ of the elastic member indicating a range of a minimum value A of $EI/L^3$ and a maximum value B of $EI/L^3$, and is a graph illustrating distribution of a combination ($\cdot$) of a loss factor tan $\delta$ and $EI/L^3$ included in the invention and a combination (x) thereof in a comparative example.
[FIG. 6] FIG. 6 is a graph illustrating a relationship between $EI/L^3$ and a transfer function (FRF OA), and is a graph illustrating a reduction in the transfer function due to a vibration damping effect by the combination ($\cdot$) of the loss factor tan $\delta$ and $EI/L^3$ included in the invention when the loss factor of the elastic member in FIG. 5 is tan $\delta = 0.1$.
[FIG. 7] FIG. 7 is a graph illustrating a relationship between $EI/L^3$ and the transfer function (FRF OA), and is a graph illustrating the reduction in the transfer function due to the vibration damping effect by the combination ($\cdot$) of the loss factor tan $\delta$ and $EI/L^3$ included in the invention when the loss factor of the elastic member in FIG. 5 is tan $\delta = 0.4$.
[FIG. 8] FIG. 8 is a graph illustrating a relationship between $EI/L^3$ and the transfer function (FRF OA), and is a graph illustrating the reduction in the transfer function due to the vibration damping effect by the combination ($\cdot$) of the loss factor tan $\delta$ and $EI/L^3$ included in the invention when the loss factor of the elastic member in FIG. 5 is tan $\delta = 1.0$.
[FIG. 9] FIG. 9 is a chart schematically illustrating a meta-damping phenomenon, occurrence of which is desired in the battery mounting structure in the invention.
[FIG. 10] FIG. 10 is a chart schematically illustrating a resonance phenomenon as a comparative example with meta-damping.
[FIG. 11] FIG. 11 is a graph illustrating a relationship between a frequency and the transfer function for illustrating interruption of an elastic wave in a wide frequency range by meta-damping that occurs in the invention.
[FIG. 12] FIG. 12 is a graph illustrating a relationship between the frequency and the transfer function for illustrating dispersion of a resonance peak at a specific frequency by a dynamic vibration absorber as a comparative example with meta-damping.
[FIG. 13] FIG. 13 is a graph illustrating a relationship between the frequency and the transfer function for illustrating a reduction in the resonance peak at the specific frequency only by damping as the comparative example with meta-damping.

[Description of Embodiments]

Hereinafter, a battery module, a battery mounting structure for a vehicle or an electric vehicle, and/or a vehicle according to an embodiment of the invention will be described in detail with reference to the drawings.

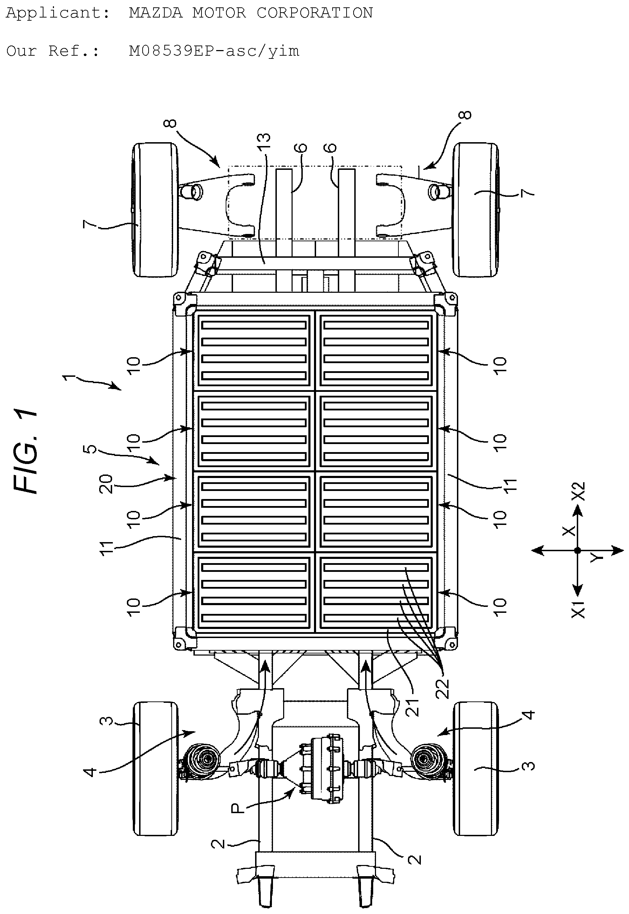

As illustrated in FIG. 1, a vehicle lower portion of the vehicle including a battery mounting structure as an embodiment of the invention may have a structure in which a casing 20 of a battery pack 5 is integrated with a vehicle body 1. Such a structure is a structure in which a battery module 10 is directly mounted on the vehicle body 1, and is referred to as a so-called skateboard structure. The vehicle may be an electric vehicle.

For example, as illustrated in FIG. 1, the vehicle, particularly the vehicle lower portion includes: the vehicle body 1 integrated with the casing 20; one or a plurality of the battery modules 10 (eight in FIG. 1) mounted on the casing 20 of the vehicle body 1; and a pair of left and right front wheels 3. The vehicle, particularly the vehicle lower portion may further include: a pair of left and right rear wheels 7; and a drive unit P that includes an electric motor for driving the pair of front wheels 3.

The battery pack 5 includes the plurality of battery modules 10 and the casing 20 that accommodates the battery modules 10. The plurality of battery modules 10 is individually fixed to the inside of the casing 20. At least one battery module 10 may be provided.

As illustrated in FIG. 1, the vehicle body 1 may include: a pair of front lower arms 2; a pair of front suspensions 4 respectively fixed to the pair of front lower arms 2 and respectively supporting the pair of front wheels 3 in a rotatable manner or a freely rotatable manner; the casing 20 of the battery pack 5 located on a vehicle rear side X2 of the pair of front lower arms 2; a pair of rear lower arms 6 located on the vehicle rear side X2 of the casing 20; a pair of rear suspensions 8 respectively fixed to the pair of rear lower arms 6 and respectively supporting the pair of rear wheels 7 in a rotatable manner or a freely rotatable manner; and/or a floor plate (not illustrated) covering an upper portion of the battery pack 5 and constituting a floor portion of a cabin.

The casing 20 of the battery pack 5 may include: a pair of left and right side members 11 separated from each other in a vehicle width direction Y and extending in a vehicle front-rear direction X; a front cross member 12 extending in the vehicle width direction Y and coupling front end portions of the pair of side members 11; and a rear cross member 13 extending in the vehicle width direction Y and coupling rear end portions of the pair of left and right side members 11.

Rear end portions of the pair of front lower arms 2 may be coupled to the front cross member 12. Front end portions of the pair of rear lower arms 6 may be coupled to the rear cross member 13.

In the present embodiment, as illustrated in FIG. 1, a group of eight battery modules 10 in a plurality or rows, particularly two rows, is arranged to be separated from each other in the vehicle width direction Y. A plurality of battery modules 10, particularly the four battery modules 10, in each of the rows may be arranged at equally-spaced intervals in the vehicle front-rear direction X. The battery modules 10 may be arranged in one row.

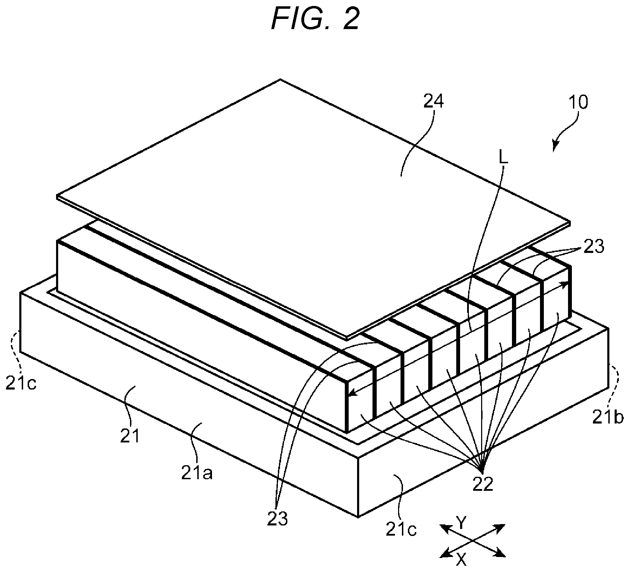

As illustrated in FIG. 2, each of the battery modules 10 includes: a battery casing 21; a plurality of cells 22 arranged side by side in the vehicle front-rear direction X and accommodated in the battery casing 21; a separator 23 interposed between each adjacent pair of the cells 22; and an elastic member 24 coupling the plurality of cells 22. In an embodiment, the battery modules 10 may not have the separator 23.

The battery casing 21 may be a rectangular parallelepiped hollow casing, and particularly, has: a front wall 21a extending in the vehicle width direction Y; a rear wall 21b extending in the vehicle width direction Y so as to be parallel to the front wall 21a on the vehicle rear side of the front wall 21a; and a pair of left and right side walls 21c coupling both left and right end portions of the front wall 21a and the rear wall 21b and extending in the vehicle front-rear direction X. Here, the actual battery casing 21 has a top wall and/or a bottom wall for covering both upper and lower sides of the plurality of cells 22 and the elastic member 24, but is omitted in FIGs. 2 to 3 in order to show the plurality of cells 22 and the elastic member 24. The battery casing 21 may have either the top wall or the bottom wall.

The cell 22 may be a secondary battery such as a lithium-ion battery, and may have a plate shape or a thinbag (pouch) shape, but may have a cylindrical shape. The plurality of plate-shaped cells 22 may be arranged in the vehicle front-rear direction X so as to be parallel to each other, that is, to extend in the vehicle width direction Y.

The separator 23 may be a thin plate-shaped or thin film-like member interposed between the two adjacent cells 22. The separator 23 only needs to be interposed between the two cells 22, and is bonded to at least one of opposing surfaces thereof, for example. The separator 23 may be made of a material that is lighter than the weight of the cell 22. Thus, when total weight of the collection of the plurality of cells 22 and the elastic member 24 is considered, the weight of the separator 23 may not particularly be considered.

As illustrated in FIGs. 2 to 3, the elastic member 24 is disposed in the battery casing 21 (however, the top wall and the bottom wall of the battery casing 21 are not illustrated to show the elastic member 24, as described above).

The elastic member 24 covers at least one of an upper surface and a lower surface of each of the plural cells 22, only the upper surface in FIGs. 2 to 3, and is fixed to the upper surface by adhesion or the like. In this way, the elastic member 24 couples the cells 22.

The battery module 10 may include a plurality of elastic members 24, particularly two elastic members 24 so that one elastic member 24 covers the upper surface of each of the plural cells 22 and the other elastic member 24 covers the lower surface of each of the plural cells 22.

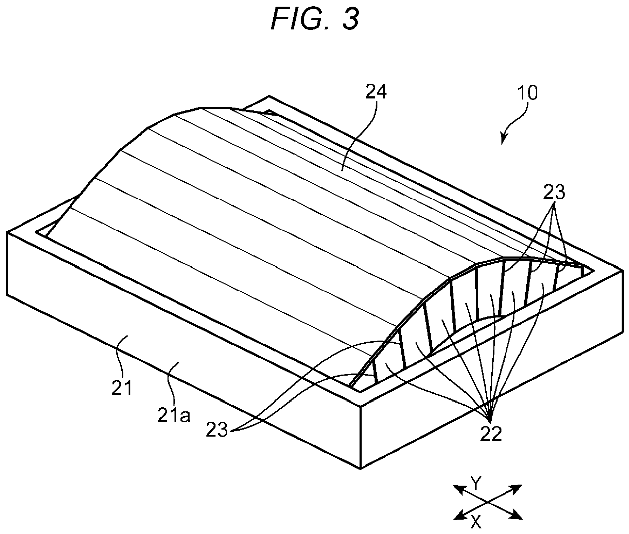

The elastic member 24 may be firmly coupled to the front wall 21a and the rear wall 21b, which are both end portions of the battery casing 21 in the vehicle front-rear direction X, **e.g.,** by bolting, welding, or the like. As a result, as illustrated in FIG. 3, in a state where the upper surfaces of the plurality of cells 22 are coupled by the elastic member 24, the collection of the plurality of cells 22 and the elastic member 24 show behavior to be deformed in the up-down direction due to vibration input during the travel of the vehicle.

In FIG. 3, the behavior of the plurality of cells 22 and the elastic member 24 in the up-down direction is illustrated in an exaggerated manner. However, the actual behavior in the up-down direction is minute behavior that fits inside the battery casing 21.

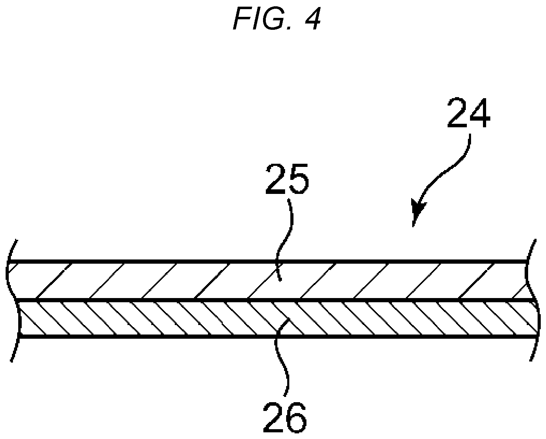

As illustrated in FIG. 4, the elastic member 24 may include a thin plate 25 made of metal, resin, or the like, and/or a damping adhesive 26 made of a polymer material or the like. The damping adhesive 26 is a sealer or a rubberbased adhesive, for example, and a polymer adhesive having a vibration damping characteristic due to the Young's modulus at a temperature of 20°C of 500 Mpa or less and a loss factor of 0.1 or greater, or the like is used. Each of the plural cells 22 is bonded to the plate 25 in the thin plate shape by the damping adhesive 26 made of the polymer adhesive or the like.

(Description of Setting of E, I, L, x)

In the battery mounting structure in the present embodiment, as illustrated in FIGs. 1 to 3, in a configuration where the battery module 10 has the plurality of cells 22 and the elastic member 24 individually supporting the plurality of cells 22, E, I, L, and x are set such that $EI/L^3$ satisfies the following equation when an elastic modulus of the elastic member 24 is E [N/m²], cross-sectional second moment of the collection of the plurality of cells 22 and the elastic member 24 is I [m⁴], a total length of the plural cells 22 in the vehicle front-rear direction is L [m], and a value of $\tan \delta$ as the loss factor of the elastic member 24 is x.

$A \le EI / L^3 \le B$, where $A = 4320x^{-0.44}$, $B = 41812x^{0.0931}$

In the battery module 10 of the present embodiment, the separator 23 is interposed between each adjacent pair of the cells 22. However, since the separator 23 is much thinner and lighter than the cell 22, it may not affect E, I, and L described above.

Conditions of the loss factor $\tan \delta$ and the elastic modulus E in the present embodiment may be the loss factor and the elastic modulus at 10 to 60°C and 100 Hz.

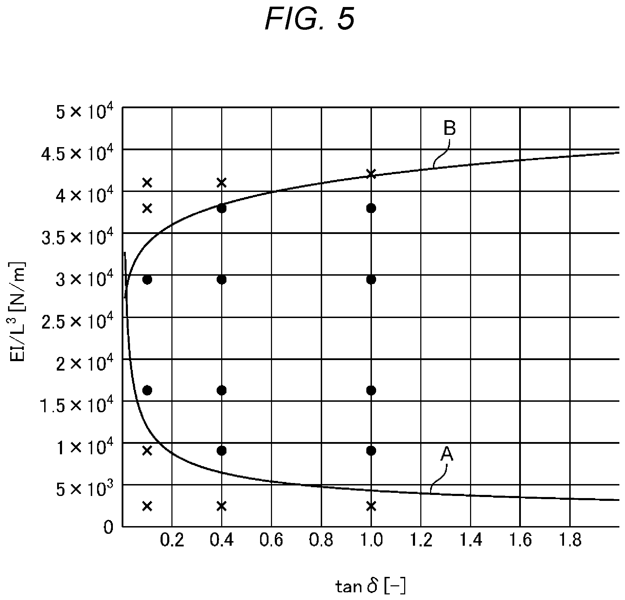

FIG. 5 is a graph of the loss factor $\tan \delta$ and $EI/L^3$ of the elastic member 24 indicating a range of a minimum value A of $EI/L^3$ and a maximum value B of $EI/L^3$, and is a graph illustrating distribution of a combination (·) of the loss factor $\tan \delta$ and $EI/L^3$ included in the invention and a combination (x) thereof in a comparative example. The combination (·) of the loss factor $\tan \delta$ and $EI/L^3$ is shown as a "dot" in FIG. 5. The combination (x) of the loss factor $\tan \delta$ and $EI/L^3$ is shown as a "cross" in FIG. 5.

According to the graph in FIG. 5, the minimum value A of $EI/L^3$ described above is positioned on a downward curve, that is, a curve that is rapidly reduced when $\tan \delta$ is about 0.2 or less and is gradually reduced when $\tan \delta$ exceeds about 0.2 as the loss factor $\tan \delta$ is increased. meanwhile, the maximum value B is positioned on an upward curve, that is, a curve that is rapidly increased when $\tan \delta$ is about 0.2 or less and is gradually increased when $\tan \delta$ exceeds about 0.2 as the loss factor $\tan \delta$ is increased.

It is understood that the combination (·) of the loss factor $\tan \delta$ and $EI/L^3$ included in the invention is distributed in a range surrounded by the curve of the minimum value A and the curve of the maximum value B in FIG. 5 and that the combination (x) in the comparative example is distributed outside the range.

As in the combination (·) in the invention of FIG. 5, when E, I, L, x (= $\tan \delta$) is set such that the $EI/L^3$ satisfies the equation $A \le EI/L^3 \le B$, the plurality of cells 22 can resonate with respect to road noise (a vibration wave of 100 Hz or about 100 Hz (100 Hz to 400 Hz)), which is vibration input to the vehicle body during travel of the vehicle, and can continuously damp the vibration.

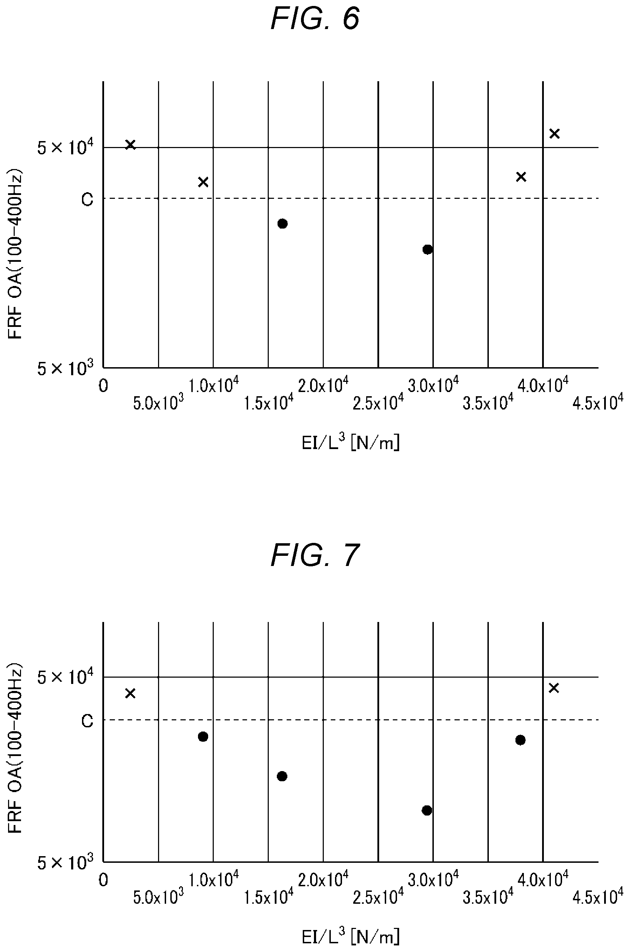

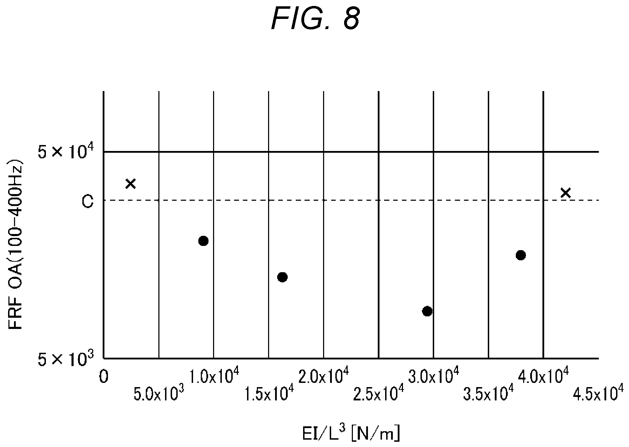

The vibration damping effect is evident from the graphs in FIGs. 6 to 8. Here, each of FIGs. 6 to 8 is a graph illustrating a relationship between $EI/L^3$ and the transfer function (FRF (Frequency Response Function) OA), and is a graph illustrating the reduction in the transfer function due to the vibration damping effect by the combination (·) of the loss factor $\tan \delta$ and $EI/L^3$ included in the invention when the loss factor of the elastic member in FIG. 5 is $\tan \delta = 1.0$, 0.4, or 1.0.

By seeing the graphs in FIGs. 6 to 8, it is understood that, with the combination (·) of the loss factor $\tan \delta$ and the $EI/L^3$ included in FIG. 5, the transfer function is reduced to a lower level than a level of a transfer function C (e.g., 29380 mm/s²/N), with which an occupant of the vehicle can sense vibration damping, due to the vibration damping effect. Meanwhile, it is understood that, with the combination (x) in the comparative example, it is higher than the level of the transfer function C, and thus the vibration damping effect cannot be achieved.

In other words, the minimum value "A" and the maximum value "B" of $EI/L^3$ may be determined based on $EI/L^3$ at which the FRF OA is below the transfer function C as shown in FIGs. 6 to 8.

The vibration damping effect illustrated in FIGs. 6 to 8 has been confirmed by the present inventors through a computer analysis. The transfer function may be a transfer function from the left front wheel 3 to the right rear wheel 7 or a transfer function from the right front wheel 3 to the left rear wheel 7.

From the above results, it is understood that the vehicle battery mounting structure in the present embodiment has the following operational effects.

During travel of the electric vehicle, the vibration wave input to the vehicle body 1 from the pair of left and right front wheels 3 is transmitted to each of the plural battery modules 10 fixed to the vehicle body 1. At the time, in each of the battery modules 10, the elastic wave is sequentially transmitted to the plurality of cells 22 aligned in the vehicle front-rear direction X via the elastic member 24. In the above battery mounting structure, E, I, L, x are set such that the $EI/L^3$ satisfies $A \leq EI/L^3 \leq B$ as described above. Accordingly, the plurality of cells 22 resonates, thereby interferes with the elastic wave, and reduces the elastic wave.

In other words, in a frequency band of the vibration input to the vehicle body 1 during the travel of the vehicle, dissipation and interference of vibration energy occur to the vibration that is sequentially transmitted for each of the cells 22 in series in the vehicle front-rear direction X. That is, it is possible to exert the vibration damping effect by so-called meta-damping (meta-resonance) for continuously damping the vibration along a transmission direction of the vibration by using the mass of the two or more cells 22 arranged in series and the loss factor or the damping characteristic of the elastic member 24.

Just as described, NVH performance of the vehicle can be improved by effectively blocking the vibration input from the front wheels 3 to the vehicle body 1 by using the plurality of cells 22 and the elastic member 24 and thereby suppressing the transmission into the cabin. Thus, it is possible to suppress the vibration at the frequency in a road noise band that is input to the vehicle body 1 during the travel.

Here, in the case where the value of the loss factor tan $\delta$ of the elastic member 24 is x=2, E, I, and L are preferably set such that $EI/L^3$ satisfies the following equation. $A \leq EI/L^3 \leq B$, where $A = 3.18 \times 10^3$, $B = 4.46 \times 10^4$

According to such a configuration, when the value of the loss factor tan $\delta$ of the elastic member 24 is x=2, a range of $EI/L^3$, that is, a range between the minimum value A and the maximum value B can be made widest, and the vibration in the road noise band can be suppressed by selecting, from the wide range, the elastic modulus E of the elastic member 24 constituting the $EI/L^3$, cross-sectional second moment I of the collection of the plurality of cells 22 and the elastic member 24, and the total length L of the plurality of cells in the vehicle front-rear direction. As a result, a degree of freedom in design of the battery mounting structure is improved.

(Description of Meta-Damping)

In order to effectively damp the vibration input from the front wheels 3 to the vehicle body 1 by a vibration model of a multi-mass point dispersion type including the plurality of cells 22 in the battery module 10 illustrated in FIGs. 1 to 2, the present inventors have intensely devised the elastic modulus E of the elastic member 24, the cross-sectional second moment I of the collection of the plurality of cells 22 and the elastic member 24, the total length L of the plurality of cells 22 in the vehicle front-rear direction, and the value x of the loss factor tan $\delta$ of the elastic

member 24, and considered a configuration to generate meta-damping (meta-resonance) in each of the battery modules 10.

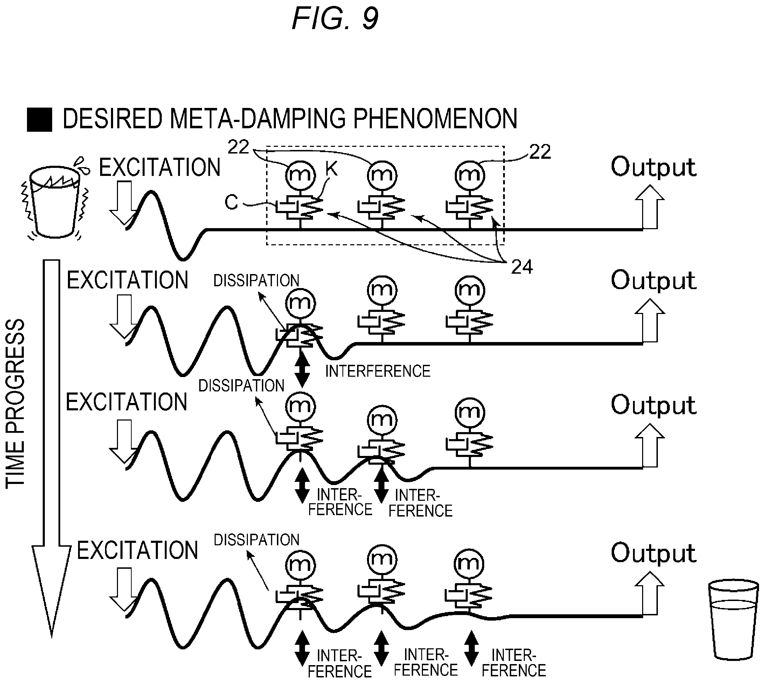

Here, as illustrated in FIG. 9, the meta-damping means to generate a plurality of resonances under a condition of the same excitation frequency in the vibration model of the multi-mass point dispersion type and to block the vibration transmitted to an output destination (that is, to generate a band gap).

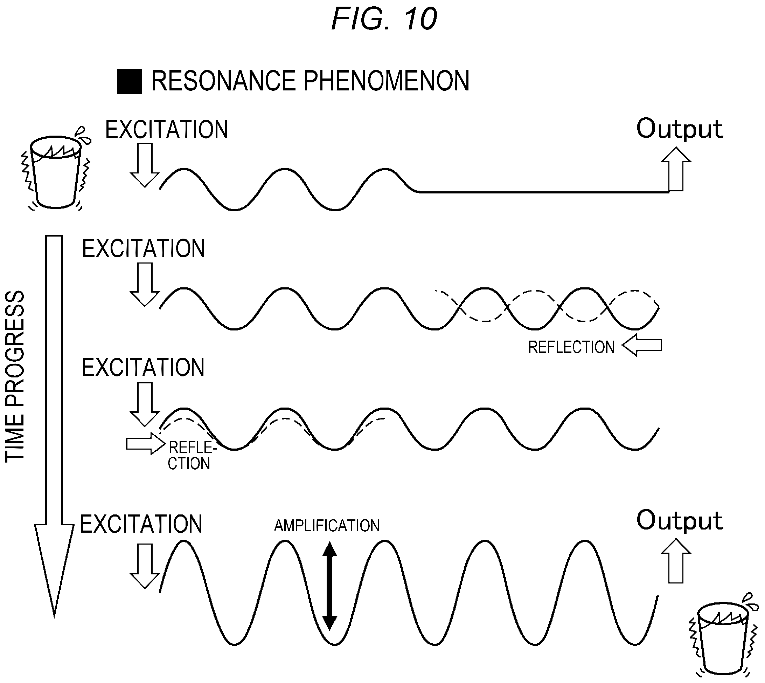

For example, as illustrated in FIG. 10, in the normal resonance phenomenon, when the vibration is continuously applied at the same frequency, an input wave resonates with a reflective wave from the output destination, and thus the vibration reaching the output destination is amplified.

However, in the meta-damping illustrated in FIG. 9, even when the plurality of cells 22 (having the mass M) and the elastic member 24 (having a spring constant K and a damping rate C) that individually support them in each of the battery modules 10 vibrate continuously at the same frequency, the input wave interferes for each set of the cells 22 and the elastic member 24, and the vibration energy is dissipated (that is, vibration damping), whereby the vibration reaching the output destination is blocked. That is, in the meta-damping, damping is caused by continuous interference so as not to cause amplification due to the resonance.

When seen in the entire vehicle body 1 in FIG. 1, the vibration input from the front wheels 3 during the travel of the vehicle is transmitted to the eight battery modules 10 through the front suspension 4, the front lower arm 2, the front cross member 12, and the bottom wall. At this time, the plurality of cells 22 and the elastic member 24 (see FIGs. 2 to 3) supporting those in each of the battery modules 10 interfere with the vibration and dissipate the vibration energy, and the vibration is thereby gradually reduced in the vehicle rear direction X2.

In order to generate damping by meta-damping as described above in each of the battery modules 10, as described above, the elastic modulus E of the elastic member 24, the cross-sectional second moment I of the collection of the plurality of cells 22 and the elastic member 24, the total length L of the plural cells 22 in the vehicle front-rear direction, and the value x of the loss factor tan $\delta$ of the elastic member 24 are set.

The meta-damping realized by the battery mounting structure in the present embodiment as described above controls the vibration level by a resonance structure of a metamaterial (more specifically, a structure of the battery module 10 formed by combining the plurality of cells 22 and the elastic member 24) in which a local resonance element and a damping element are combined. Accordingly, in a target frequency band (band gap), the vibration is not transmitted to the cabin (the vehicle interior) due to interaction by the resonance structure.

(Description of Meta-Damping, Dynamic Vibration Absorber, and Damping)

Here, as a method for reducing the vibration, differences in meta-damping, the dynamic vibration absorber, and damping will be described.

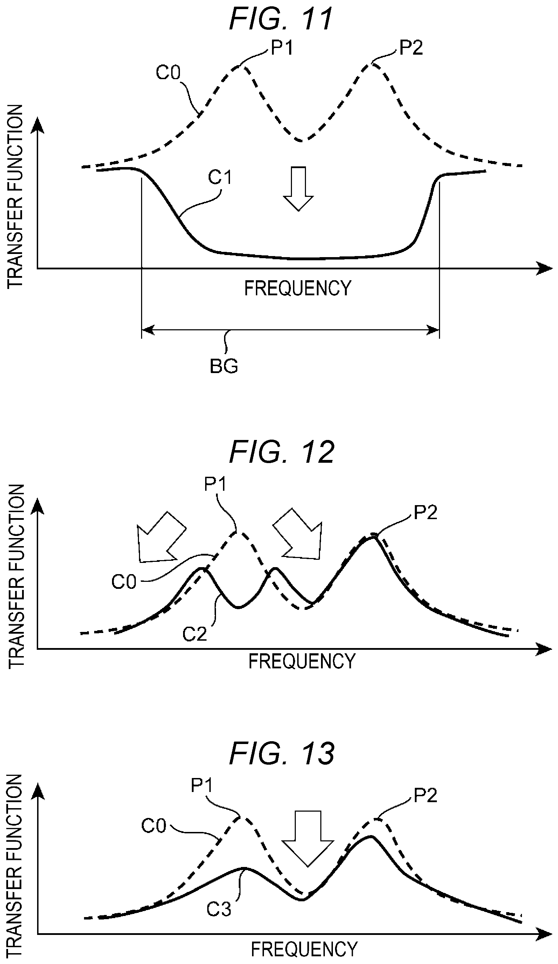

In the meta-damping, as indicated by a curve C1 of a graph in FIG. 11, an input elastic wave C0 is blocked and damped by interference caused by interaction between the input elastic wave C0 (the elastic wave having peaks P1, P2) and a meta-resonator (the vibration model of the multi-mass point dispersion type in FIG. 9 described above), and a band gap BG (that is, a frequency band in which the vibration is blocked and damped) is enlarged to form the wide BG connected to one.

In the dynamic vibration absorber, vibration of a main vibration system is damped by adding an auxiliary mass and transferring the energy to an auxiliary vibration system. More specifically, in the dynamic vibration absorber, as indicated by a curve C2 of a graph in FIG. 12, the vibration is damped by dividing the peak P1 as the large transfer function of the input elastic wave C0 into two small peaks. As a result, the wide band gap BG (see FIG. 11) such as meta-damping does not occur.

In damping, the energy generated by the vibration is dissipated into heat or fluid resistance by a damping material, and the vibration is thereby damped. More specifically, in damping, as indicated by a curve C3 of the graph in FIG. 13, the vibration is damped by lowering the peak P1 having the large transfer function of the input elastic wave C0. Therefore, the band gap BG such as meta-damping is not generated.

(Modified Examples)

In the above battery module 10 illustrated in FIGs. 2 to 3, the elastic member 24 is coupled to the upper surface of each of the plural cells 22. However, as a modified example of the invention, preferably, the elastic member 24 covers both upper and lower surfaces of each of the plural cells 22 and is coupled to both the upper and lower surfaces of the plurality of cells 22.

As in this modified example, the elastic member 24 covers both the upper surface and the lower surface of each of the plurality of cells 22, and the plurality of cells 22 can stably be supported. As a result, the individual cells 22 can reliably be resonated with the elastic wave, and the stable vibration suppressing effect can be achieved.

[Reference Signs List]

1:    vehicle body
3:    front wheel
10:   battery module
21    battery casing
22:   cell

23:   separator
24:   elastic member
25:   plate
26:   damping adhesive

**Claims**

1. A battery module (10) for a vehicle comprising:

   a battery casing (21);
   a plurality of cells (22) accommodated in the battery casing (21) and disposed in series in a predetermined direction (X); and
   an elastic member (24) that covers a surface of each of the plural cells (22), couples the cells (22), and is coupled to both end portions in the predetermined direction (X) of the battery casing (21), and
   when an elastic modulus of the elastic member (24) is E [N/m$^2$], cross-sectional second moment of collection of the plurality of cells (22) and the elastic member (24) is I [m$^4$], a total length of the plural cells (22) in the predetermined direction (X) is L [m], and a value of tan $\delta$ as a loss factor of the elastic member (24) is x, EI/L$^3$ satisfies the following equation,

   $$A \le EI/L^3 \le B,$$

   where A = 4320x$^{-0.44}$, B = 41812x$^{0.0931}$.

2. The battery module (10) according to claim 1,

   wherein the predetermined direction is a vehicle front-rear direction, and/or
   wherein the elastic member (24) is configured to cover at least one surface of an upper surface and a lower surface of each of the plural cells (22).

3. The battery module (10) according to claim 1 or 2, wherein
   when the value of tan $\delta$ is x=2, EI/L$^3$ satisfies the following equation,

   $$A \le EI/L^3 \le B,$$

   where A = 3.18 $\times$ 10$^3$, B = 4.46 $\times$ 10$^4$.

4. The battery module (10) according to any one of the preceding claims, wherein
   the elastic member (24) is configured to cover both an upper surface and a lower surface of each of the plurality of cells (22).

**5.** The battery module (10) according to any one of the preceding claims, wherein
the elastic member (24) includes a plate (25) made of metal and/or resin.

**6.** The battery module (10) according to any one of the preceding claims, wherein
the elastic member (24) includes an adhesive (26).

**7.** The battery module (10) according to claim 6, wherein
the adhesive (26) is made of a polymer material.

**8.** The battery module (10) according to claim 6 or 7, wherein
the adhesive (26) has a loss factor of 0.1 or greater.

**9.** The battery module (10) according to any one of claims 6 to 8 referring back to claim 5, wherein
each of the plural cells (22) is bonded to the plate (25) by the adhesive (26).

**10.** The battery module (10) according to any one of the preceding claims, wherein
the battery casing (21) includes a first wall (21a), a second wall (21b) extending in parallel to the first wall (21a), and one or more side walls (22) coupling the first wall (21a) and the second wall (21b) and extending in the predetermined direction.

**11.** A battery mounting structure for a vehicle comprising:

> a vehicle body (1);
> at least one battery module (10) according to any one of the preceding claims, wherein the battery module (10) is fixed to the vehicle body (1); and
> a pair of left and right front wheels (3) rotatably attached to both left and right front portions of the vehicle body (1).

**12.** The battery mounting structure according to claim 11, wherein

> the battery casing (21) further includes a front wall (21a) extending in a vehicle width direction (Y) and a rear wall (21b) extending in the vehicle width direction (Y) so as to be parallel to the front wall (21a), and
> the elastic member (24) is coupled to the front wall (21a) and the rear wall (21b).

**13.** The battery mounting structure according to claim 12, wherein the battery casing (21) further includes one or more side walls (21c) coupling end portions of the front wall (21a) and the rear wall (21b) and extending in the vehicle front-rear direction.

**14.** A vehicle comprising the battery module (10) according to any one of claims 1 to 10 and/or the battery mounting structure according to any one of claims 11 to 13.

**15.** The vehicle according to claim 14, wherein the vehicle is an electric vehicle.

FIG. 1

Applicant: MAZDA MOTOR CORPORATION

Our Ref.: M08539EP-asc/yim

EP 4 708 507 A1

# FIG. 2

FIG. 3

FIG. 4

## FIG. 5

## FIG. 6

## FIG. 7

# FIG. 8

## FIG. 9

■ DESIRED META-DAMPING PHENOMENON

TIME PROGRESS

EXCITATION → Output

EXCITATION DISSIPATION → Output
INTERFERENCE

EXCITATION DISSIPATION → Output
INTER-FERENCE INTER-FERENCE

EXCITATION DISSIPATION → Output
INTER-FERENCE INTER-FERENCE INTER-FERENCE

EP 4 708 507 A1

## FIG. 10

■ RESONANCE PHENOMENON

EXCITATION

Output

EXCITATION

REFLECTION

EXCITATION

REFLE-CTION

TIME PROGRESS

EXCITATION

AMPLIFICATION

Output

EP 4 708 507 A1

EP 4 708 507 A1

*FIG. 11*

*FIG. 12*

*FIG. 13*

18

Europäisches
Patentamt

European
Patent Office

Office européen
des brevets

# EUROPEAN SEARCH REPORT

**Application Number**

EP 25 19 8014

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2024/170780 A1 (TAGA KAZUKI [JP] ET AL) 23 May 2024 (2024-05-23) * the whole document * ----- | 1-15 | INV. H01M50/242 H01M50/249 |
| A | US 2022/311042 A1 (LEE KANG WON [KR] ET AL) 29 September 2022 (2022-09-29) * the whole document * ----- | 1-15 | |

**TECHNICAL FIELDS SEARCHED (IPC)**

H01M

The present search report has been drawn up for all claims

| Place of search | Date of completion of the search | Examiner |
|---|---|---|
| Munich | 19 January 2026 | Swiatek, Ryszard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 19 8014

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2026

| Patent document cited in search report | Publication date | Patent family member(s) | Publication date |
|---|---|---|---|
| US 2024170780 A1 | 23-05-2024 | CN 116941113 A | 24-10-2023 |
| | | DE 112022000644 T5 | 26-10-2023 |
| | | JP 7621846 B2 | 27-01-2025 |
| | | JP 2022146315 A | 05-10-2022 |
| | | KR 20230128355 A | 04-09-2023 |
| | | US 2024170780 A1 | 23-05-2024 |
| | | WO 2022201748 A1 | 29-09-2022 |
| US 2022311042 A1 | 29-09-2022 | CN 115117534 A | 27-09-2022 |
| | | KR 20220132267 A | 30-09-2022 |
| | | US 2022311042 A1 | 29-09-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023046644 A